# EUROPEAN PATENT SPECIFICATION

(11) **EP 3 647 644 B1**
(45) Date of publication and mention of the grant of the patent: **07.04.2021**
(21) Application number: 18203599.8
(22) Date of filing: 31.10.2018
(51) Int. Cl.: F16L 5/04

(54) **FIRE PROTECTION DEVICE**
BRANDSCHUTZVORRICHTUNG
DISPOSITIF DE PROTECTION CONTRE L'INCENDIE

(43) Date of publication of application: 06.05.2020
(73) Proprietor: Hilti Aktiengesellschaft, 9494 Schaan (LI)
(72) Inventor: Terver, William, 6800 Feldkirch (AT)
(74) Representative: Hilti Aktiengesellschaft Corporate Intellectual Property

(56) References cited:
- WO-A1-2018/130979
- GB-A- 2 475 238
- US-B1- 9 089 726

## Description

The invention refers to a fire protection device and a system comprising a tubular object and such a fire protection device. GB 2 475 238 A discloses a fire protection device for sealing a penetration in a wall.

Fire protection devices are used for sealing openings or penetrations in walls or ceilings, in particular openings for cable ducts, to prevent the spread of fire and smoke in buildings. Such fire protection devices are for example a permanently plastic modelling compound for fire protection applications, a firestop sealant, a firestop foam or a cable disc. Since the said materials are at least partially flexible they can be shaped freely to create a tight seal between a tubular object and a wall.

Modelling compounds or cable discs are highly flexible and relatively easy to install, but the materials do not offer an attractive finish after application. Moreover, the materials are vulnerable to dust and humidity.

For use of firestop sealants or foams, special tooling is required for applying the material correctly and for achieving a satisfactory finish. Accordingly, the application of such materials requires a lot of time and can also lead to significant waste of material, since these materials are difficult to measure off.

Therefore, it is an object of the present invention to provide a fire stop device which has sufficient fire protection properties, is easy to install and offers a satisfactory finish.

The invention provides a fire protection device for sealing a penetration in a wall, comprising an elongated tube being configured to be fixed on a tubular object penetrating the wall and a sealing portion fixed to the tube, the sealing portion comprising a central opening in alignment with the tube and an sealing material, wherein the sealing portion is moveable with respect to the tube along a defined section of the tube. The tubular object is for example a cable or a pipe, in particular a non-burning cable or pipe. Furthermore, the tubular object may be either stiff or flexible.

Due to the sealing portion being moveable with respect to the tube, the sealing portion can be positioned on the tube such that it directly abuts a wall surrounding an opening to be sealed. Accordingly, a tight seal against air and smoke can be achieved. Furthermore, the elongated tube can be easily placed on a tubular object, whereby the fire protection device is easy to install. Besides, the elongated tube provides additional support for the tubular object, i.e. structural stability is added to non-supported tubular objects penetrating a wall. In other words, the tube prevents the tubular object from bending at least over the length of the tube.

The sealing portion sits on the tube for example in such a manner that no airflow is allowed between the tube and the sealing portion in order to reliably prevent the spread of heat and smoke when the fire protection device is installed in a building as intended.

The sealing portion may be disc shaped and therefore provide a satisfactory finish of the sealing.

In an alternative embodiment, the sealing portion may be disc shaped and have to ability to be opened in half in order to be easily mounted and dismounted from the tubular object, allowing for increased ease of installation and maintenance flexibility.

According to an embodiment, the sealing portion comprises a support, in particular a support ring, wherein the support is provided with the opening. Due to the support, the sealing portion has an adequate stability and can be handled easily during installation of the fire protection device. Furthermore, the connection between tube and sealing portion may be stable due to the support.

The sealing material, being for example a deformable material, may be fixed to the support. In other words, the sealing material is supported by the support and thereby kept in a desired shape. In particular, the support prevents an adverse deformation of the sealing material during installation of the fire protection device.

According to a further embodiment, it is possible that the support is provided by the sealing material. Thus, the fire protection device may be particularly cost-effective. However, this requires a certain dimensional stability of the sealing material, hence not all known sealing materials are suitable for this solution.

The opening of the sealing portion may be threaded and the tube may comprise a threaded section on its outer surface such that the sealing portion can be screwed onto the tube. By means of the corresponding threads, the sealing portion can be fixed and positioned on the tube at the same time. Furthermore, a thread provides a tight seal that prevents an airflow between the tube and the sealing portion. In particular, the tube comprises a male thread and the sealing portion comprises a female tread.

For the positioning of the sealing portion, the sealing portion has to be rotated so that an axial displacement is achieved due to the threaded connection. Thus, the sealing element can be rotated into the desired axial position on the tube. However, the sealing element can be placed only along the defined section of the tube, wherein the defined section corresponds to the threaded section of the tube.

Preferably, the threaded section extends from an axial end of the tube. This allows the sealing portion to be easily screwed onto the tube from one side.

According to one embodiment, a sleeve extends from the sealing portion, in particular from the support, in an axial direction, wherein the thread of the sealing portion is arranged on an inner surface of the sleeve. Due to the sleeve, the threaded section of the sealing portion is elongated such that the sealing portion may be mounted stable on the tube. Moreover, the sealing between the tube and the sealing portion is even more reliable.

Preferably, the sealing portion comprises a wall, in particular a cylindrical wall, having a greater diameter than the diameter of the tube and a sealing section located radially between the wall and the diameter of the tube, wherein the sealing material is placed in the sealing section. Thereby, sealing material can be easily portioned by filling the sealing section with sealing material. In particular, when the sealing section is filled flush with sealing material, i.e. no sealing material protrudes beyond the cylindrical wall in axial direction of the fire protection device, an adequate amount of sealing material is provided. Thus, no calculations of the volume of sealing material are required.

An axial thickness of the sealing material may correspond to an axial length of the cylindrical wall. Thereby, the sealing material may abut a wall comprising the opening to be sealed and a reliable sealing may be achieved.

The tube, the wall, the sleeve and/or the support may consist of metal and/or the wall, the support and/or the sleeve are formed as a single piece. Due to the use of metal, the elements mentioned above may be dimensionally stable even at high temperatures. Thereby, the sealing material may be held in position adjacent to an opening to be sealed. For example, the metal is copper, brass or aluminium. Furthermore, the sealing portion can be handled easily when the wall, the support and the sleeve are formed as a single piece.

For fixing the tube on a tubular object, the tube can be deformable at least in a clamping section in order to clamp the tube on the tubular object. The clamping may be easily achieved with a suitable press tool.

In order to be able to position the sealing portion along the entire axial length of the threaded section of the tube, the thread and the clamping section preferably do not overlap.

The sealing material may be ring-shaped so that the fire protection device may be suited for effectively sealing circular wall openings for cables or pipes with circular cross sections.

According to one embodiment, an axial thickness of the ring of sealing material corresponds to an axial length of the cylindrical segment and the cylindrical segment surrounds the sealing material in radial direction. With this design, the sealing material can, for example, be portioned and preformed in a mould and then inserted into the sealing section.

Preferably, an axial length of the tube is longer than an axial length of the sealing portion, for example at least four times longer, and/or wherein a diameter of the sealing portion is several times larger than a diameter of the tube, for example at least three times larger. Due to the axial length of the tube, a support section on the tubular object is provided for the sealing portion. This is advantageous especially for flexible cables or pipes, since the tube provides a straight section for mounting the sealing portion. Thereby, the sealing portion is arranged essentially perpendicular to the tubular object. Due to the diameter of the sealing portion being larger than the diameter of the tube, penetrations in walls can be covered by the sealing portion.

The sealing material is preferably an intumescent material. Intumescent materials expand at high temperatures, thereby closing a penetration in a wall by advancing into the penetration and offering a tight seal against air and smoke when the fire protection device is installed properly.

The invention further provides a system comprising a tubular object, in particular a cable or a pipe, and pipe a fire protection device as described precedingly, wherein the tube is fixed to the tubular object, in particular clamped on the tubular object.

The fire protection device when fixed to the pipe, but not to the wall, provides for an excellent application within the seismic building construction area.

Further features and advantages of the invention will become apparent from the following description and from the accompanying drawings to which reference is made. In the drawings:
- Figure 1 shows a fire protection device according to the invention during installation at a wall,
- Figure 2 shows the installation of an additional fire protection device according to the invention at a wall,
- Figure 3 shows the fire protection device according to the invention in an unassembled condition,
- Figure 4 shows a front view of the fire protection device of Figure 3,
- Figure 5 shows the installation of a sealing portion on a tube in order to assemble the fire protection device,
- Figure 6 shows the installation of a fire protection device on a tubular object,

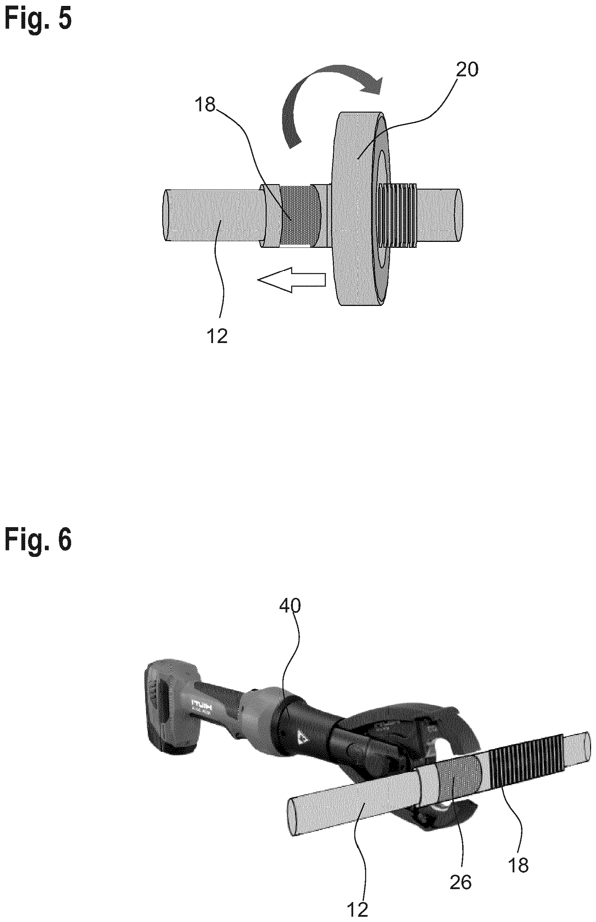

- Figure 5 shows the installation of a sealing portion on a tube in order to assemble the fire protection device,
- Figure 6 shows the installation of a fire protection device on a tubular object,

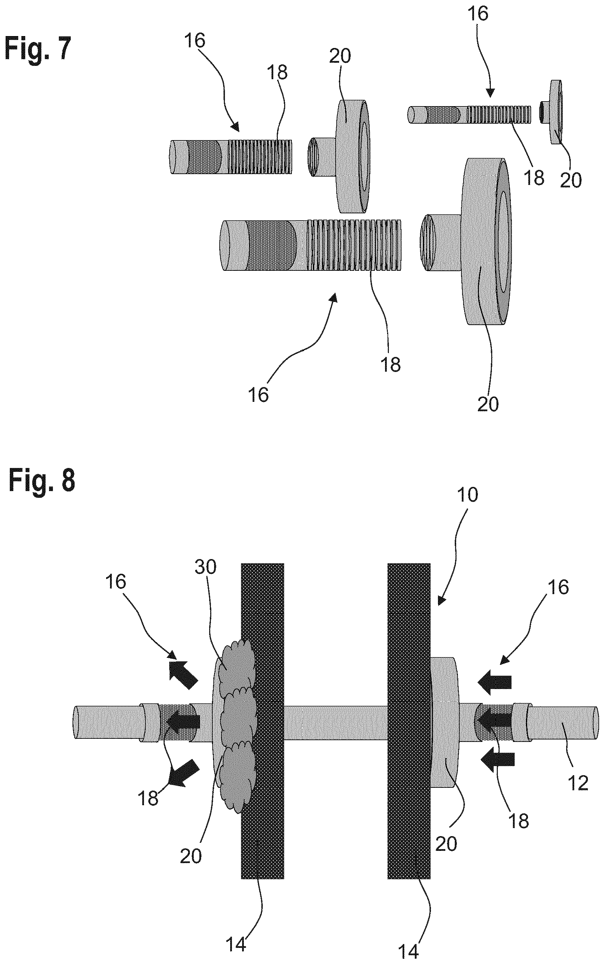

- Figure 7 shows different embodiments of fire protection devices according to the invention, and
- Figure 8 visualises the function of the fire protection device.

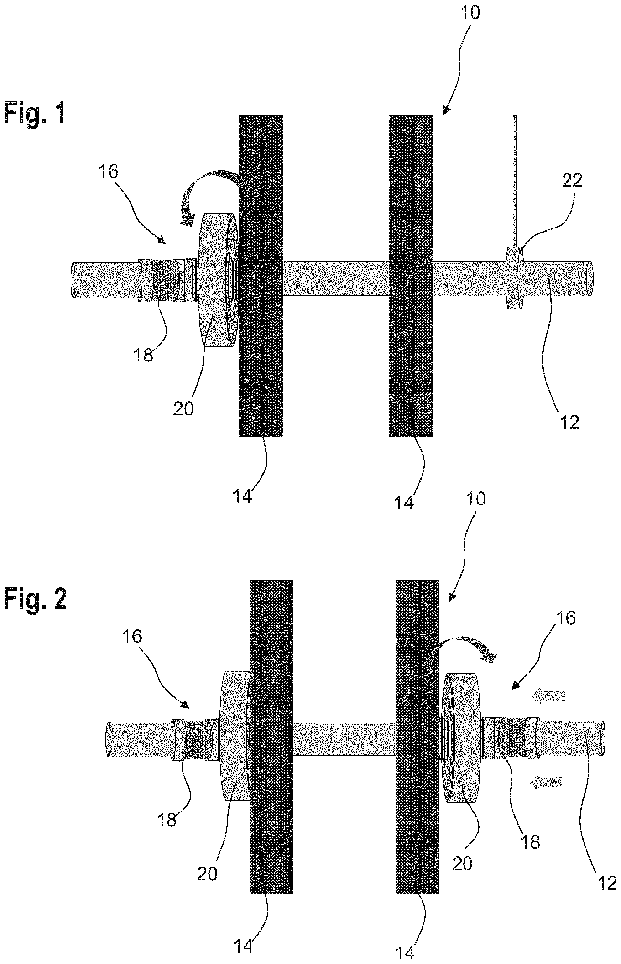

Figure 1 shows a wall 10, for example an inner wall of a building, and a tubular object 12 penetrating the wall 10. The tubular object 12 is for example a non-burning cable or pipe.

The wall 10 itself may be solid or, as shown in Figures 1 and 2, comprise two separate plates 14.

For installation of the tubular object 12, an opening has to be provided in the wall 10. In case of need, in particular in order to provide proper fire protection, the opening has to be tightly sealed such that air, smoke and/or heat are prevented from circulating through the wall 10 in order to prevent that smoke spreads rapidly.

For this purpose, a fire protection device 16 according to the invention is installed on the tubular object 12 in a fixed position, which is configured to seal a penetration in the wall 10.

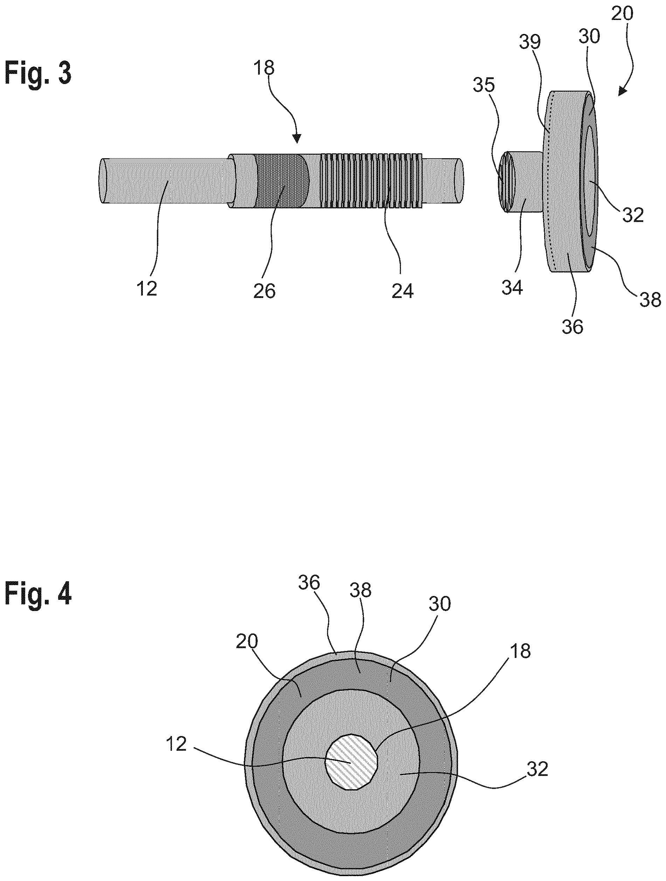

As shown in Figures 3 and 4, the fire protection device 16 comprises an elongated tube 18 and a sealing portion 20 which is preferably disc shaped. The tube 18 is fixed on the tubular object 12 penetrating the wall 10.

In Figure 3, the elongated tube 18 of the fire protection device 16 is installed on the tubular object 12, while the sealing portion 20 is still separate from the tube 18.

In this depiction, the different sections of the tube 18 are illustrated clearly.

The defined section along which the sealing portion 20 is moveable is realized by means of a threaded section 24 in the illustrated embodiments, in particular a male thread. The threaded section 24 extends from an axial end of the tube 18 and takes up for example up to the half of the length of the tube 18.

Furthermore, the tube 18 comprises a clamping section 26 in which the tube 18 is deformable order to clamp the tube 18 on a cable or a pipe as shown in Figure 3.

The axial length of the tube 18 is longer than the axial length of the sealing portion 20, for example at least four times longer.

Further, the diameter of the sealing portion 20 is several times larger than the diameter of the tube 18, for example at least three times larger, as can be seen in Figure 4. Figure 4 shows a front view of the fire protection device 16 of Figure 3.

The sealing portion 20 comprises a support 32 with a central opening 28 in alignment with the tube 18, a sealing material 32 and a wall 36.

In particular, the opening 28 is threaded with a thread 35 correspondingly to the threaded section 24 of the tube 18, such that the sealing portion 20 can easily be threaded onto the tube 18.

Furthermore, due to the threaded connection between the tube 18 and the sealing portion 20, an axial position of the sealing portion 20 on the tube 18 can be precisely adjusted by simply rotating the sealing portion 20. Thereby, it can be ensured that the sealing portion 20 can tightly abut the wall 10. Especially, inaccuracies in positioning the tube 18 on the tubular object 12 can be overcome by simply adjusting the position of the sealing portion 20 on the tube 18.

Figure 5 illustrates how the sealing portion 20 can be axially displaced on the tube 18 by rotating the sealing portion 20.

In order to provide a sufficient sealing function, the sealing material 30 is, for example, an intumescent material.

The support 32 particularly supports the sealing material 30 and holds the sealing material 30 in a defined position.

In the shown embodiment, a sleeve 34 extends from the sealing portion 20, in particular from the support 32 in an axial direction, wherein the thread 35 of the sealing portion 20 is arranged on an inner surface of the sleeve 34. Due to the sleeve 34, the sealing portion 20 is mounted stable on the tube 18.

The wall 36, the support 32 and/or the sleeve 34 may be formed as a single piece. This is advantageous with regard to the handling of the sealing portion 20. In particular, it is avoided that the sealing portion 20 is unintentionally deformed during mounting the sealing portion 20 on the tube 18 or during mounting the fire protection device 16 on the tubular object 12.

In an alternative embodiment which is not visualized in the Figures, the support is provided by the sealing material 30.

In the shown embodiment, the wall 36 is a cylindrical wall. The diameter of the wall 36 is greater than the diameter of the tube 18, in particular greater than the diameter of the support 32.

Thereby, the wall 36 restricts a sealing section 38, which is located radially between the wall 36 and the tube 18, in particular between the wall 36 and the support 32. That means the cylindrical wall surrounds the sealing material 30 in radial direction.

In the sealing section 38, sealing material 30 is located. Since the sealing section 38 is a defined space, the sealing material 30 can be easily filled in the sealing section 38 when producing the fire protection device 16. When the sealing section 38 is filled up to the rim, the right amount of sealing material 30 is provided for sealing an opening in a wall 10 sufficiently.

In the depicted embodiments, the sealing material 30 is ring-shaped. For example, the sealing material 30 is preformed in ring-shape and inserted in the sealing section 38. An axial thickness of the ring of sealing material 30 corresponds to an axial length of the cylindrical wall 36.

Alternatively, the sealing material 30 is provided as a deformable material or a paste which is filled in the sealing section 38.

The tube 18, the wall 36, the sleeve 34 and/or the support 32 consist of metal, for example of copper, brass or aluminium.

For example, the support 32, i.e. the sleeve 34 and the wall 36, may be connected by means of a radially extending disc 39, which has a small wall thickness compared to the axial length of the cylindrical wall 36. For example, the disc 39 has a thickness of 1 mm or less. The disc 39 is illustrated by a dotted line in Figure 3.

Due to the disc 39, the sealing material 30 is confined in the sealing section 38 and kept near to the wall 10. In other words, in case of a temperature rise when the sealing material 30 expands, it is ensured that the sealing material 30 expands in a direction towards the wall 10 and not away from the wall 10.

In order to fine-tune a tightness of the seal between the fire protection device 16 and the wall 10, the sealing portion 20 is moveable with respect to the tube 18 along a defined section of the tube 18.

In the installation situation visualized in Figure 1, the tubular object 12 is supported by means of a support system 22 on one side of the wall 10.

The support system 22 secures the tubular object 12 against axial displacement, thereby enabling a tight abutment of the fire protection device 16 against the wall 10. The tight abutment is essential for a sufficient sealing of an opening in the wall 10. Due to the support system 22, only one fire protection device 10 is needed in the installation situation of Figure 1.

In the installation situation visualized in Figure 2, a fire protection device 16 is provided on both sides of the wall 10. Since the fire protection devices 16, in particular the tubes 18 are in a fixed position on the respective tubular object 12, a tight sealing can be achieved by using two fire protection elements 16 without using a separate support 22.

Each of the fire protection devices 16 is brought into tight abutment with the wall 10 such that the tubular object 12 is tensed between the fire protection devices 16, i.e. the tubular object 12 does not sag in the area between the outside surfaces of the wall 10.

Figure 6 shows how the tube 18 is fixed on a tubular object 12 by means of a tool 40. By actuating the tool 40, the clamping section 26 is deformed such that the tube 18 is pressed tightly against the tubular object 12, in particular such that the tube 18 is fixed on the tubular object 12 in a fixed axial position. Thus, after deforming the clamping section 26 properly with the tool 40, the tube 18 cannot be moved in an axial direction along the tubular object 12 anymore. In particular, the tube 18 cannot be detached non-destructively.

Figure 7 shows several fire protection devices 16 of different sizes. The ratio of the diameter of the tube 18 and the diameter of the sealing portion 20 may vary for different sizes. Also, the ratio of the axial length of the tube 18 and the axial length of the sealing portion 20 may vary for different sizes.

Figure 8 illustrates the function of the fire protection device 16 in case of a severe temperature rise on one side of the wall 10, for example when a fire occurs. In such a case, the sealing material 30, in particular the intumescent material, expands and thereby fills up the penetration in the wall 10.

Furthermore, due to the expansion of the sealing material 30 on one side of the wall 10, the fire protection device 16 on the opposite side of the wall 10 is drawn against the wall 10 even more tightly (indicated by arrows), sealing the penetration in the wall 10 particularly reliably.

## Claims

1. Fire protection device (16) for sealing a penetration in a wall (10), comprising an elongated tube (18) being configured to be fixed on a tubular object (12) penetrating the wall (10) and a sealing portion (20) fixed to the tube (18), the sealing portion (20) comprising a central opening (28) in alignment with the tube (18) and a sealing material (30), **characterized in that** the sealing portion (20) is moveable with respect to the tube (18) along a defined section of the tube (18).

2. Fire protection device (16) according to claim 1, wherein the sealing portion (20) comprises a support (32), in particular a support ring, wherein the support (32) is provided with the opening (28).

3. Fire protection device (16) according to claim 2, wherein the support (32) is provided by the sealing material (30).

4. Fire protection device (16) according to any one of the preceding claims, wherein the opening (28) of the sealing portion (20) is threaded and the tube (18) comprises a threaded section (24) on its outer surface such that the sealing portion (20) can be screwed onto the tube (18).

5. Fire protection device (16) according to claim 4, wherein the threaded section (24) extends from an axial end of the tube (18).

6. Fire protection device (16) according to claim 4 or 5, wherein a sleeve (34) extends from the sealing portion (20), in particular from the support (32) in an axial direction, wherein the thread (35) of the sealing portion (20) is arranged on an inner surface of the sleeve (34).

7. Fire protection device (16) according to any one of the preceding claims, wherein the sealing portion (20) comprises a wall (36), in particular a cylindrical wall (36) having a greater diameter than the diameter of the tube (18) and a sealing section (38) located radially between the wall (36) and the diameter of the tube (18), wherein the sealing material (30) is placed in the sealing section (38).

8. Fire protection device (16) according to claim 7, wherein an axial thickness of the sealing material (30) corresponds to an axial length of the wall (36).

9. Fire protection device (16) according to any one of the preceding claims, wherein the tube (18), the wall (36), the sleeve (34) and/or the support (32) consist of metal and/or wherein the wall (36), the support (32) and/or the sleeve (34) are formed as a single piece.

10. Fire protection device (16) according to any one of the preceding claims, wherein the tube (18) is deformable at least in a clamping section (26) in order to clamp the tube (18) on a tubular object (12).

11. Fire protection device (16) according to any one of the preceding claims, wherein the sealing material (30) is ring-shaped.

12. Fire protection device (16) according to claim 11, when dependent on claim 8, wherein the wall (36) is a cylindrical wall, wherein an axial thickness of the ring of sealing material (30) corresponds to an axial length of the cylindrical wall (36) and the cylindrical wall (36) surrounds the sealing material (30) in the radial direction.

13. Fire protection device (16) according to any one of the preceding claims, wherein the sealing portion is disc shaped and an axial length of the tube (18) is longer than an axial length of the sealing portion (20), for example at least four times longer, and/or wherein a diameter of the sealing portion (20) is several times larger than a diameter of the tube (18), for example at least three times larger.

14. Fire protection device (16) according to any one of the preceding claims, wherein the sealing material (30) is an intumescent material.

15. System comprising a tubular object (12), in particular a cable or a pipe, and a fire protection device (16) according to any one of the preceding claims, wherein the tube (18) is fixed to the tubular object (12), in particular clamped on the tubular object (12).

## Patentansprüche

1. Brandschutzvorrichtung (16) zum Abdichten einer Durchführung in einer Wand (10), die ein längliches Rohr (18), das konfiguriert ist, um an einem rohrförmigen Gegenstand (12) befestigt zu sein, der durch die Wand (10) führt, und einen Abdichtungsabschnitt (20) umfasst, der an dem Rohr (18) befestigt ist, wobei der Abdichtungsabschnitt (20) eine mittlere Öffnung (28), die mit dem Rohr (18) fluchtet, und ein Abdichtungsmaterial (30) umfasst, **dadurch gekennzeichnet, dass** der Abdichtungsabschnitt (20) in Bezug auf das Rohr (18) entlang eines definierten Bereichs des Rohrs (18) bewegbar ist.

2. Brandschutzvorrichtung (16) nach Anspruch 1, wobei der Abdichtungsabschnitt (20) eine Stütze (32) umfasst, insbesondere einen Stützring, wobei die Stütze (32) mit der Öffnung (28) versehen ist.

3. Brandschutzvorrichtung (16) nach Anspruch 2, wobei die Stütze (32) durch das Abdichtungsmaterial (30) bereitgestellt ist.

4. Brandschutzvorrichtung (16) nach einem der vorhergehenden Ansprüche, wobei die Öffnung (28) des Abdichtungsabschnitts (20) gewindet ist und das Rohr (18) einen gewindeten Bereich (24) an seiner Außenoberfläche derart aufweist, dass der Abdichtungsabschnitt (20) auf das Rohr (18) geschraubt werden kann.

5. Brandschutzvorrichtung (16) nach Anspruch 4, wobei sich der Gewindebereich (24) aus einem axialen Ende des Rohrs (18) erstreckt.

6. Brandschutzvorrichtung (16) nach Anspruch 4 oder 5, wobei sich eine Muffe (34) aus dem Abdichtungsabschnitt (20) erstreckt, insbesondere aus der Stütze (32) in einer axialen Richtung, wobei das Gewinde (35) des Abdichtungsabschnitts (20) auf einer Innenoberfläche der Muffe (34) angeordnet ist.

7. Brandschutzvorrichtung (16) nach einem der vorhergehenden Ansprüche, wobei der Abdichtungsabschnitt (20) eine Wand (36), insbesondere eine zylindrische Wand (36), die einen größeren Durchmesser als der Durchmesser des Rohrs (18) aufweist, und einen Abdichtungsbereich (38) umfasst, der sich radial zwischen der Wand (36) und dem Durchmesser des Rohrs (18) befindet, wobei das Abdichtungsmaterial (30) in dem Abdichtungsbereich (38) platziert ist.

8. Brandschutzvorrichtung (16) nach Anspruch 7, wobei eine axiale Dicke des Abdichtungsmaterials (30) einer axialen Länge der Wand (36) entspricht.

9. Brandschutzvorrichtung (16) nach einem der vorhergehenden Ansprüche, wobei das Rohr (18), die Wand (36), die Muffe (34) und/oder die Stütze (32) aus Metall besteht und/oder wobei die Wand (36), die Stütze (32) und/oder die Muffe (34) als ein einzelnes Stück ausgebildet ist.

10. Brandschutzvorrichtung (16) nach einem der vorhergehenden Ansprüche, wobei das Rohr (18) wenigstens in einem Festklemmbereich (26) verformbar ist, um das Rohr (18) an einem rohrförmigen Gegenstand (12) festzuklemmen.

11. Brandschutzvorrichtung (16) nach einem der vorhergehenden Ansprüche, wobei das Abdichtungsmaterial (30) ringförmig ist.

12. Brandschutzvorrichtung (16) nach Anspruch 11, wenn abhängig von Anspruch 8, wobei die Wand (36) eine zylindrische Wand ist, wobei eine axiale Dicke des Rings aus Abdichtungsmaterial (30) einer axialen Länge der zylindrischen Wand (36) entspricht und die zylindrische Wand (36) das Abdichtungsmaterial (30) in der radialen Richtung umgibt.

13. Brandschutzvorrichtung (16) nach einem der vorhergehenden Ansprüche, wobei der Abdichtungsabschnitt scheibenförmig ist und eine axiale Länge des Rohrs (18) länger als eine axiale Länge des Abdichtungsabschnitts (20), beispielsweise wenigstens viermal länger ist und/oder wobei ein Durchmesser des Abdichtungsabschnitts (20) um ein Vielfaches größer als ein Durchmesser des Rohrs (18), beispielsweise wenigstens dreimal größer ist.

14. Brandschutzvorrichtung (16) nach einem der vorhergehenden Ansprüche, wobei das Abdichtungsmaterial (30) ein Intumeszenzmaterial ist.

15. System, das einen rohrförmigen Gegenstand (12), insbesondere ein Kabel oder eine Leitung, und eine Brandschutzvorrichtung (16) nach einem der vorhergehenden Ansprüche umfasst, wobei das Rohr (18) an dem rohrförmigen Gegenstand (12) befestigt, insbesondere an dem rohrförmigen Gegenstand (12) festgeklemmt ist.

## Revendications

1. Dispositif de protection contre l'incendie (16) pour étanchéifier une pénétration dans une paroi (10), comprenant un tube allongé (18) conçu pour être fixé sur un objet tubulaire (12) pénétrant dans la paroi (10) et une partie d'étanchéité (20) fixée au tube (18), la partie d'étanchéité (20) comprenant une ouverture centrale (28) en alignement avec le tube (18) et un matériau d'étanchéité (30), **caractérisé en ce que** la partie d'étanchéité (20) est mobile par rapport au tube (18) le long d'une section définie du tube (18).

2. Dispositif de protection contre l'incendie (16) selon la revendication 1, dans lequel la partie d'étanchéité (20) comprend un support (32), en particulier une bague de support, dans lequel le support (32) est pourvu de l'ouverture (28).

3. Dispositif de protection contre l'incendie (16) selon la revendication 2, dans lequel le support (32) est fourni par le matériau d'étanchéité (30).

4. Dispositif de protection contre l'incendie (16) selon l'une quelconque des revendications précédentes, dans lequel l'ouverture (28) de la partie d'étanchéité (20) est filetée et le tube (18) comprend une section filetée (24) sur sa surface externe de telle sorte que la partie d'étanchéité (20) peut être vissée sur le tube (18).

5. Dispositif de protection contre l'incendie (16) selon la revendication 4, dans lequel la section filetée (24) s'étend depuis une extrémité axiale du tube (18).

6. Dispositif de protection contre l'incendie (16) selon la revendication 4 ou 5, dans lequel un manchon (34) s'étend depuis la partie d'étanchéité (20), en particulier depuis le support (32) dans une direction axiale, dans lequel le filetage (35) de la partie d'étanchéité (20) est disposé sur une surface interne du manchon (34).

7. Dispositif de protection contre l'incendie (16) selon l'une quelconque des revendications précédentes, dans lequel la partie d'étanchéité (20) comprend une paroi (36), en particulier une paroi cylindrique (36) de diamètre supérieur au diamètre du tube (18) et une section d'étanchéité (38) située radialement entre la paroi (36) et le diamètre du tube (18), dans lequel le matériau d'étanchéité (30) est placé dans la section d'étanchéité (38).

8. Dispositif de protection contre l'incendie (16) selon la revendication 7, dans lequel une épaisseur axiale du matériau d'étanchéité (30) correspond à une longueur axiale de la paroi (36).

9. Dispositif de protection incendie (16) selon l'une quelconque des revendications précédentes, dans lequel le tube (18), la paroi (36), le manchon (34) et/ou le support (32) sont constitués de métal et/ou dans lequel la paroi (36), le support (32) et/ou le manchon (34) sont formés d'une seule pièce.

10. Dispositif de protection incendie (16) selon l'une quelconque des revendications précédentes, dans lequel le tube (18) est déformable au moins dans une section de serrage (26) de façon à serrer le tube (18) sur un objet tubulaire (12).

11. Dispositif de protection contre l'incendie (16) selon l'une quelconque des revendications précédentes, dans lequel le matériau d'étanchéité (30) est de forme annulaire.

12. Dispositif de protection contre l'incendie (16) selon la revendication 11, lorsqu'elle dépend de la revendication 8, dans lequel la paroi (36) est une paroi cylindrique, dans lequel une épaisseur axiale de l'anneau du matériau d'étanchéité (30) correspond à une longueur axiale de la paroi cylindrique (36) et la paroi cylindrique (36) entoure le matériau d'étanchéité (30) dans la direction radiale.

13. Dispositif de protection contre l'incendie (16) selon l'une quelconque des revendications précédentes, dans lequel la partie d'étanchéité est en forme de disque et une longueur axiale du tube (18) est plus longue qu'une longueur axiale de la partie d'étanchéité (20), par exemple au moins quatre fois plus longue, et/ou dans lequel un diamètre de la partie d'étanchéité (20) est plusieurs fois plus grand qu'un diamètre du tube (18), par exemple au moins trois fois plus grand.

14. Dispositif de protection contre l'incendie (16) selon l'une quelconque des revendications précédentes, dans lequel le matériau d'étanchéité (30) est un matériau intumescent.

15. Système comprenant un objet tubulaire (12), en particulier un câble ou un tuyau, et un dispositif de protection contre l'incendie (16) selon l'une quelconque des revendications précédentes, dans lequel le tube (18) est fixé à l'objet tubulaire (12), en particulier serré sur l'objet tubulaire (12).
